# FASCICULE DE BREVET EUROPEEN

(11) **EP 1 949 305 B1**
(45) Date de publication et mention de la délivrance du brevet: **27.05.2009**
(21) Numéro de dépôt: 06819201.2
(22) Date de dépôt: 31.10.2006
(51) Int. Cl.: G06K 9/46

(54) **PROCEDE DE RECONNAISSANCE AUTOMATIQUE D'EMPREINTES DIGITALES**
VERFAHREN ZUM AUTOMATISCHEN ERKENNEN VON FINGERABDRÜCKEN
METHOD FOR AUTOMATICALLY RECOGNISING FINGERPRINTS

(30) Priorité: 08.11.2005 FR 0511355
(43) Date de publication de la demande: 30.07.2008
(73) Titulaire: THALES, 92200 Neuilly sur Seine (FR)
(72) Inventeur: MARTI, Sandra, F-92000 Nanterre (FR); ALLOUCHE, Cyril, F-78490 Montfort L'amaury (FR)
(74) Mandataire: Chaverneff, Vladimir
(86) Numéro de dépôt international: PCT/EP2006/067975
(87) Numéro de publication internationale: WO 2007/054450

(56) Documents cités:
- EP-A- 0 791 891
- EP-A- 1 403 810
- ROSS A ET AL: "A hybrid fingerprint matcher" PATTERN RECOGNITION, ELSEVIER, KIDLINGTON, GB, vol. 36, no. 7, juillet 2003 (2003-07), pages 1661-1673, XP004417159 ISSN: 0031-3203

## Description

La présente invention se rapporte à un procédé de reconnaissance automatique d'empreintes digitales.

Les procédés actuels de reconnaissance d'empreintes digitales, lorsqu'ils sont utilisés en particulier pour identifier des individus afin de permettre par exemple l'accès à des locaux protégés, l'utilisation de certains appareils ou le contrôle des identités, font souvent appel aux « minuties » de ces empreintes, c'est-à-dire des zones ou points particuliers des empreintes permettant de les discriminer entre elles. Les paramètres de ces minuties sont généralement leurs coordonnées, leur orientation et leur valence (c'est-à-dire le type de la minutie, qui peut être une bifurcation ou une fin de ligne). En outre, pour affiner la discrimination, on se sert d'autres paramètres complémentaires qui sont par exemple des informations statistiques locales ou des « ridge-counts » (comptage de crêtes). La prise en compte de la totalité de ces paramètres entraîne la constitution d'une base de données extrêmement volumineuse lorsqu'elle contient les empreintes digitales d'un grand nombre d'individus, et l'opération de comparaison d'empreintes digitales d'un individu avec celles d'une telle base de données comportant les empreintes d'un grand nombre d'individus nécessite un temps de calcul important.

La présente invention a pour objet un procédé de reconnaissance automatique d'empreintes digitales dont la mise en oeuvre nécessite le minimum possible de données à enregistrer sur une base de données et le minimum de temps de calcul pour la comparaison d'empreintes par rapport à celles enregistrées pour un certain nombre d'individus, et ce, avec un résultat optimal.

Le procédé de l'invention est un procédé de reconnaissance automatique d'empreintes digitales, consistant à établir une base de données en numérisant des images d'empreintes digitales d'individus, en détectant les minuties correspondantes, en sélectionnant les minuties les plus discriminantes, en enregistrant les paramètres caractéristiques de ces minuties, puis, lors de l'étape de reconnaissance d'empreintes d'un individu donné, à numériser les empreintes digitales de cet individu, à détecter les minuties de ces empreintes, à enregistrer leurs paramètres caractéristiques, à comparer ces paramètres avec ceux enregistrés dans la base de données, et il est caractérisé en ce que, lors de l'établissement de la base de données et lors de la prise d'empreintes dudit individu donné, on enregistre, pour chaque empreinte de la base et de l'individu en question, en tant que paramètres caractéristiques des minuties, au moins les spectres des minuties sélectionnées, et en ce qu'après comparaison des paramètres caractéristiques des empreintes de l'individu avec les paramètres correspondants des empreintes de la base de données, on déduit un score pour chacune des comparaisons ainsi effectuées, et on prend une décision.

Selon une autre caractéristique de l'invention, on prend une décision en comparant le score final, issu de tous les résultats de comparaison, à un seuil déterminé par apprentissage.

Selon une autre caractéristique de l'invention, on optimise le calcul du spectre de chaque minutie en extrayant une boîte englobante autour de cette minutie pour obtenir une imagette du contenu de cette boîte, en calculant le spectre de cette imagette, en recalant ce spectre par rotation en fonction de l'orientation de la minutie, en réduisant la dimension de ce spectre après rotation et en enregistrant ce spectre réduit.

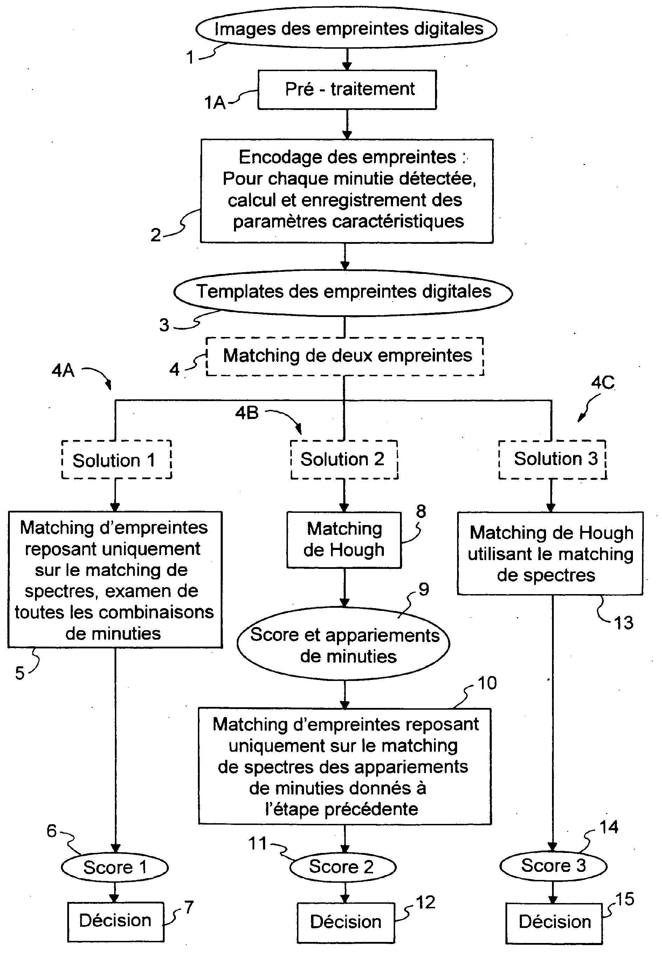

La présente invention sera mieux comprise à la lecture de la description détaillée d'un mode de réalisation, pris à titre d'exemple non limitatif et illustré par le dessin annexé, sur lequel :
- la figure unique est un chronogramme simplifié d'un exemple de mise en oeuvre du procédé de l'invention.

On a représenté sur la figure unique du dessin les principales étapes de mise en oeuvre du procédé de l'invention. Pour les étapes précédant celles relatives à la comparaison, on n'a pas fait apparaître la différence entre, d'une part, la prise d'empreintes digitales et leur traitement pour toute une population d'individus, en vue de constituer une base de données, et d'autre part les mêmes opérations effectuées postérieurement pour un individu donné que l'on cherche à identifier en comparant les caractéristiques de ses empreintes digitales à celles des empreintes mémorisées dans cette base de données, du fait que toutes ces opérations sont effectuées de la même manière.

Tout d'abord, on enregistre (1) toutes les empreintes digitales et on les numérise, puis on encode (2) ces informations numérisées. En option, on peut réaliser un pré-traitement (1A) entre les étapes 1 et 2. Ce pré-traitement consiste essentiellement en un contrôle de qualité des images obtenues à la suite de l'étape 1, en vue de rejeter les images inexploitables par suite d'une trop mauvaise qualité. Cet encodage (2) consiste essentiellement, pour chaque minutie détectée, à calculer et à enregistrer ses coordonnées, orientation, valence et spectre. On établit ensuite (3) le « template » (ensemble de données qui caractérisent une empreinte, à savoir ses minuties, des informations générales sur son image, ses centres, ...). Ensuite, on procède à la comparaison (4), deux à deux, des caractéristiques d'une empreinte donnée avec toutes celles des empreintes de la base de données. Ce type de comparaison est également bien connu sous le nom de « matching », et sera simplement appelé comparaison dans tout le texte. Selon l'invention, cette comparaison peut se faire de trois façons principales différentes, notées 4A à 4C.

Pour calculer un score de comparaison d'empreintes digitales, on calcule par exemple la probabilité d'appariement de chaque couple de minuties examiné (une minutie d'une empreinte de la base de données et une minutie correspondante de l'empreinte de l'individu à identifier). A cet effet, on calcule la corrélation C de ces deux spectres, puis la probabilité P d'appariement de ce couple. Cette probabilité est fonction de la corrélation C et des valences des deux minuties, ce qui représente trois paramètres d'entrée pour cette fonction.

Selon la solution 4A, la comparaison (5) est effectuée uniquement par comparaison des spectres des minuties et examen de toutes les combinaisons possibles de minuties. Pour réaliser cette comparaison, on examine à chaque fois un couple de minuties, l'une appartenant à une empreinte de la base de données et l'autre à l'empreinte de l'individu à identifier. Ensuite, on calcule le score final (6) en utilisant tous les résultats de comparaison. Un score est calculé en sommant les différentes valeurs P pondérées par un coefficient déterminé, et on prend une décision (7) (identification ou non de l'individu dont on vient de comparer les empreintes à celles issues de la base de données). Cette décision est prise en comparant le score final à un seuil. Le seuil est trouvé par apprentissage, en faisant des tests sur une base d'images représentatives de la population à qui est destiné le système de reconnaissance d'empreintes. Ce seuil est fixé à la livraison du système, et il n'y a pas d'adaptation automatique du seuil en fonction de la qualité des empreintes. C'est la méthode la plus rapide des trois méthodes 4A à 4C. On notera que, lors de la mise en oeuvre des méthodes 4B et 4C, décrites ci-dessous, on prend également une décision en comparant le score final à un seuil.

Selon la solution 4B, on effectue préalablement une comparaison classique (8), ne prenant en compte que les coordonnées, valence et orientation des minuties. Cette comparaison est par exemple du type dit « matching de Hough » et est effectuée à chaque fois sur un couple de minuties (une minutie d'une empreinte de la base de données et une minutie de l'empreinte de l'individu à identifier). La comparaison du type matching de Hough est effectuée sur toutes les combinaisons possibles, selon une certaine tolérance, c'est à dire que la différence d'orientation entre deux minuties ne doit pas dépasser une certaine valeur maximale, et il en est de même pour les différences entre coordonnées. Cela permet de limiter le nombre de comparaisons à effectuer et de gagner ainsi en temps de calcul. En sortie de la comparaison de Hough, on obtient un premier score de comparaison d'empreintes (9) et une liste des meilleurs appariements de minuties. Ces meilleurs couples de minuties subissent ensuite une deuxième comparaison afin de consolider le premier résultat. Cette deuxième comparaison (10) est effectuée uniquement sur les spectres des minuties retenues à l'étape (9). On calcule le score final (11) à partir des différents résultats de ces comparaisons de spectres, et on prend une décision (12) à partir du score final.

Selon la solution 4C, on effectue directement une comparaison (13) du type « matching de Hough », cette comparaison portant sur les quatre paramètres caractéristiques suivants des minuties : coordonnées, orientation, valence et spectre. On calcule ensuite le score de comparaison de deux empreintes en utilisant les résultats de ces comparaisons de minuties (14) et on prend une décision (15). Cette solution est la plus performante des trois en termes de fiabilité d'identification.

Le calcul de chacun des spectres des minuties est réalisé de la façon suivante. A partir des images obtenues à l'étape 1 (ou 1A), on extrait une « boîte englobante » autour de chaque minutie sélectionnée, cette boîte ne conservant que la partie pertinente de la minutie, c'est-à-dire la seule nécessaire à la comparaison ultérieure. On calcule alors le spectre de cette imagette à l'aide d'une transformée de Fourier (par exemple une FFT). Ensuite, on recale le spectre par rotation, cette rotation étant fonction de l'orientation associée à la minutie correspondante, puis on réduit la dimension du spectre, par exemple par sélection d'une bande spectrale utile, ou bien grâce à une analyse en composantes principales ou à un sous-échantillonnage. Enfin, on enregistre le spectre ainsi traité dans le « template » associé à l'empreinte examinée.

En conclusion, le procédé de l'invention permet de réaliser une reconnaissance optimale d'empreintes digitales du fait que les informations du domaine spectral sont moins sensibles que les informations de niveaux de gris aux conditions d'acquisition des empreintes (sous-encrage, sur-encrage,..), et que ces informations n'occupent pas un volume trop important (grâce à la possibilité de réduire les dimensions du spectre),

## Revendications

1. Procédé de reconnaissance automatique d'empreintes digitales, consistant à établir une base de données en numérisant des images d'empreintes digitales d'individus, en détectant les minuties correspondantes, en sélectionnant les minuties les plus discriminantes, en enregistrant les paramètres caractéristiques de ces minuties, puis, lors de l'étape de reconnaissance d'empreintes d'un individu donné, à numériser les empreintes digitales de cet individu, à détecter les minuties de ces empreintes, à enregistrer leurs paramètres caractéristiques, à comparer ces paramètres avec ceux enregistrés dans la base de données, **caractérisé en ce que,** lors de l'établissement de la base de données et lors de la prise d'empreintes dudit individu donné, on enregistre, pour chaque empreinte de la base et de l'individu en question, en tant que paramètres caractéristiques des minuties, au moins les spectres d'imagettes autour des minuties sélectionnées, et **en ce qu'**après comparaison des paramètres caractéristiques des empreintes de l'individu avec les paramètres correspondants des empreintes de la base de données, on déduit un score pour chacune des comparaisons ainsi effectuées, et on prend une décision.

2. Procédé selon la revendication 1, **caractérisé en ce que** l'on prend une décision en comparant le score final, issu de tous les résultats de comparaison, à un seuil déterminé par apprentissage.

3. Procédé selon la revendication 1 ou 2, **caractérisé en ce que** l'on optimise le calcul du spectre de chaque minutie en extrayant une boîte englobante autour de cette minutie pour obtenir une imagette du contenu de cette boîte, en calculant le spectre de cette imagette, en recalant ce spectre par rotation en fonction de l'orientation de la minutie, en réduisant la dimension de ce spectre après rotation et en enregistrant ce spectre réduit.

4. Procédé selon la revendication 1 ou 2, **caractérisé en ce que** les spectres des minuties sont obtenus par transformée de Fourier.

5. Procédé selon la revendication 3 ou 4, **caractérisé en ce que** la réduction de la dimension du spectre est faite par sélection d'une bande spectrale utile.

6. Procédé selon la revendication 3 ou 4, **caractérisé en ce que** la réduction de la dimension du spectre est faite par analyse en composantes principales.

7. Procédé selon la revendication 3 ou 4, **caractérisé en ce que** la réduction de la dimension du spectre est faite par sous-échantillonnage.

8. Procédé selon l'une des revendications précédentes, **caractérisé en ce que** pour calculer un score de comparaison d'empreintes digitales, on calcule la probabilité d'appariement de chaque couple de minuties en calculant la corrélation C de leurs deux spectres, puis la probabilité P d'appartement de ce couple, qui est fonction de la corrélation C et des valences des deux minuties.

9. Procédé selon l'une des revendications précédentes, **caractérisé en ce que** la comparaison est effectuée uniquement à l'aide des spectres des minuties.

10. Procédé selon l'une des revendications 1 à 8, **caractérisé en ce que** la comparaison est du type « matching de Hough » et est effectuée à l'aide des spectres des minuties, ainsi que des coordonnées, orientation et valence des minuties.

11. Procédé selon l'une des revendications 1 à 8, **caractérisé en ce que** la comparaison comporte une première étape du type « matching de Hough » effectuée à l'aide des coordonnées, orientation et valence des minuties, cette étape comportant un calcul de scores de comparaison et d'appariement de minuties, et une deuxième étape de comparaison de spectres des appariements de minuties obtenus à la première étape.

## Claims

1. Method of automatically recognizing fingerprints, consisting in establishing a database by digitizing images of fingerprints of individuals, by detecting the corresponding minutiae, by selecting the most discriminating minutiae, by storing the characteristic parameters of these minutiae, then, in a step for recognizing prints of a given individual, in digitizing the fingerprints of this individual, in detecting the minutiae of these fingerprints, in storing their characteristic parameters, in comparing these parameters with those stored in the database, **characterized in that,** on establishing the database and on taking prints of said given individual, for each print in the database and of the individual concerned, at least the spectra of imagettes around the selected minutiae are stored as parameters characteristic of the minutiae, and **in that**, after comparison of the parameters characteristic of the prints of the individual with the corresponding parameters of the prints in the database, a score is deduced for each of the duly performed comparisons, and a decision is made.

2. Method according to Claim 1, **characterized in that** a decision is made by comparing the final score, obtained from all the comparison results, with a threshold determined by learning.

3. Method according to Claim 1 or 2, **characterized in that** the calculation of the spectrum of each minute detail is optimized by extracting a box encompassing this minute detail to obtain a thumbnail image of the content of this box, by calculating the spectrum of this thumbnail image, by realigning this spectrum by rotation according to the orientation of the minute detail, by reducing the dimension of this spectrum after rotation and by storing this reduced spectrum.

4. Method according to Claim 1 or 2, **characterized in that t**he spectra of the minutiae are obtained by Fourier transform.

5. Method according to Claim 3 or 4, **characterized in that** the reduction of the dimension of the spectrum is done by selecting a useful spectral band.

6. Method according to Claim 3 or 4, **characterized in that** the reduction of the dimension of the spectrum is done by main component analysis.

7. Method according to Claim 3 or 4, **characterized in that** the reduction of the dimension of the spectrum is done by undersampling.

8. Method according to one of the preceding claims, **characterized in that,** to calculate a fingerprint comparison score, the probability of matching each pair of minutiae by calculating the correlation C of their two spectra, and then the probability P of matching this pair, which depends on the correlation C and the valencies of the two minutiae, are calculated.

9. Method according to one of the preceding claims, **characterized in that** the comparison is done only using the spectra of the minutiae.

10. Method according to one of Claims 1 to 8, **characterized in that** the comparison is of the "Hough matching" type and is performed using the spectra of the minutiae, and the coordinates, orientation and valency of the minutiae.

11. Method according to one of Claims 1 to 8, **characterized in that** the comparison comprises a first step of the "Hough matching" type performed using the coordinates, orientation and valency of the minutiae, this step including a calculation of minute detail comparison and matching scores, and a second step for comparing spectra of the minute detail matches obtained in the first step.

## Patentansprüche

1. Verfahren zur automatischen Erkennung von Fingerabdrücken, das darin besteht, eine Datenbank aufzubauen, indem Bilder von Fingerabdrücken von Personen digitalisiert werden, indem die entsprechenden Minutien erfasst werden, indem die am stärksten unterscheidenden Minutien ausgewählt werden, indem die kennzeichnenden Parameter dieser Minutien gespeichert werden, dann, im Schritt der Erkennung von Abdrücken einer gegebenen Person, die Fingerabdrücke dieser Person zu digitalisieren, die Minutien dieser Abdrücke zu erfassen, ihre kennzeichnenden Parameter zu speichern, diese Parameter mit den in der Datenbank gespeicherten Parametern zu vergleichen, **dadurch gekennzeichnet, dass** beim Aufbau der Datenbank und bei der Abdrucknahme der gegebenen Person für jeden Abdruck der Datenbank und der betreffenden Person als kennzeichnende Parameter der Minutien mindestens die Spektren von Miniaturbildern um die ausgewählten Minutien herum gespeichert werden, und dass nach Vergleich der kennzeichnenden Parameter der Abdrücke der Person mit den entsprechenden Parametern der Abdrücke der Datenbank ein Score für jeden der so durchgeführten Vergleiche abgeleitet und eine Entscheidung getroffen wird.

2. Verfahren nach Anspruch 1, **dadurch gekennzeichnet, dass** eine Entscheidung getroffen wird, indem der End-Score, der von allen Vergleichsergebnissen stammt, mit einem durch Lernen bestimmten Schwellwert verglichen wird.

3. Verfahren nach Anspruch 1 oder 2, **dadurch gekennzeichnet, dass** die Berechnung des Spektrums jeder Minutie optimiert wird, indem eine umfassende Box um diese Minutie herum extrahiert wird, um ein Miniaturbild des Inhalts dieser Box zu erhalten, indem das Spektrum dieses Miniaturbilds berechnet wird, indem dieses Spektrum durch Drehung in Abhängigkeit von der Ausrichtung der Minutie neu eingestellt wird, indem die Abmessung dieses Spektrums nach Drehung reduziert wird und indem dieses reduzierte Spektrum gespeichert wird.

4. Verfahren nach Anspruch 1 oder 2, **dadurch gekennzeichnet, dass** die Spektren der Minutien durch Fourier-Transformation erhalten werden.

5. Verfahren nach Anspruch 3 oder 4, **dadurch gekennzeichnet, dass** die Reduzierung der Abmessung des Spektrums durch Wahl eines Nutzspektralbands durchgeführt wird.

6. Verfahren nach Anspruch 3 oder 4, **dadurch gekennzeichnet, dass** die Reduzierung der Abmessung des Spektrums durch Hauptkomponenten-Analyse durchgeführt wird.

7. Verfahren nach Anspruch 3 oder 4, **dadurch gekennzeichnet, dass** die Reduzierung der Abmessung des Spektrums durch Unterabtastung durchgeführt wird.

8. Verfahren nach einem der vorhergehenden Ansprüche, **dadurch gekennzeichnet, dass** zur Berechnung eines Vergleichs-Scores von Fingerabdrücken die Paarbildungswahrscheinlichkeit jedes Paars von Minutien berechnet wird, indem die Korrelation C ihrer zwei Spektren und dann die Paarbildungswahrscheinlichkeit P dieses Paars berechnet wird, die von der Korrelation C und den Valenzen der zwei Minutien abhängt.

9. Verfahren nach einem der vorhergehenden Ansprüche, **dadurch gekennzeichnet, dass** der Vergleich nur mit Hilfe der Spektren der Minutien durchgeführt wird.

10. Verfahren nach einem der Ansprüche 1 bis 8, **dadurch gekennzeichnet, dass** der Vergleich vom Typ "Hough-Matching" ist und mit Hilfe der Spektren der Minutien sowie der Orientierungs- und Valenz-Koordinaten der Minutien durchgeführt wird.

11. Verfahren nach einem der Ansprüche 1 bis 8, **dadurch gekennzeichnet, dass** der Vergleich einen ersten Schritt vom Typ "Hough-Matching", der mit Hilfe der Orientierungs- und Valenz-Koordinaten der Minutien durchgeführt wird, wobei dieser Schritt eine Berechnung von Vergleichs-Scores und Minutien-Paarbildungen aufweist, und einen zweiten Schritt des Vergleichs von Spektren der Minutien-Paarbildungen aufweist, die im ersten Schritt erhalten werden.
